Europäisches Patentamt

**European Patent Office**

Office européen des brevets

(19)

(11) Publication number: **0 022 328**
**A1**

(12) **EUROPEAN PATENT APPLICATION**

(21) Application number: **80302132.8**

(22) Date of filing: **25.06.80**

(51) Int. Cl.³: **G 01 C 9/12**

(30) Priority: **29.06.79 US 53397**

(43) Date of publication of application:
**14.01.81 Bulletin 81/2**

(84) Designated Contracting States:
**AT BE CH DE FR GB IT LI LU NL SE**

(71) Applicant: **Litton Systems, Inc.**
**360 North Crescent Drive**
**Beverly Hills California 90210(US)**

(72) Inventor: **McAdams, Hugh P.Jr.**
**RD 2 Hopewell Road**
**Port Deposit Maryland 21904(US)**

(72) Inventor: **Paulovitz, Albert C.**
**137 West Street Road**
**Kennett Square Pennsylvania 19348(US)**

(74) Representative: **Godsill, John Kenneth et al,**
**Haseltine Lake & CO. Hazlitt House 28 Southampton**
**Buildings Chancery Lane**
**London WC2A 1AT(GB)**

(54) **A cant angle sensor.**

(57) A cant angle sensor comprises a conductive, nonmagnetic pendulum (24) suspended from the shaft (23) of a resolver (22) for limited angular travel in the slot (21) of a C-shaped magnet (18). When the angle of the sensor changes, the pendulum seeks a new vertical null, and the C-shaped magnet exerts a viscous hysteresis damping force causing the pendulum to quickly come to rest without oscillation. The rotor magnet wire (29) of the resolver is connected directly to output terminals (32) to avoid friction due to brush contact on the rotor shaft (23).

Fig_1

EP 0 022 328 A1

SPECIFICATION

The invention relates to a sensor which gives an indication of a cant angle by means of an output from a resolver.

Cant angle sensors which are used to give an indication of the tilt of a land vehicle are well known in the prior art. A pendulum which is suspended for angular motion seeks a vertical null position as the tilt of the sensor is changed, and the pendulum may be attached to the shaft of a resolver which develops an output signal indicative of this tilt angle. Because the resolver shaft is delicately balanced, the pendulum is prone to oscillations about a vertical null point when a new null is being sought. Various damping means such as magnets in combination with a ferromagnetic pendulum have been used to limit these oscillations. The force exerted by the magnets on the pendulum requires the pendulum to be heavy so that the damping force of the magnets is not so great that the pendulum will not seek a true vertical null. Brush contacts rub on the resolver shaft to couple signals developed in the resolver to output terminals. These brush contacts inherently exert a frictional force on the resolver shaft. A very light brush force often results in noise and erroneous signals being generated, while a heavier force increases the turning resistance of the shaft requiring the pendulum to be even larger. In an attempt to avoid the use of brush contacts, hairsprings have been provided to conduct output signals from the rotor coils to output terminals. These hairsprings --- never without an elastic memory however, and this memory exerts a restoring force on the rotor shaft to give a null signal which is not true. A torqueless or brushless resolver can be built utilizing pure electromagnetic coupling between the rotor shaft and the resolver output leads, but the cost of such a device is too high to be a commercially satisfactory alternative.

- 3 -

The present invention comprises a cant angle sensor which uses a small, lightweight, conductive, and nonmagnetic pendulum suspended from the shaft of a resolver. Stops are provided to limit the arc through which the pendulum may swing, and the pendulum itself is suspended so as to be partially contained within the slot of a C-shaped magnet. As the cant or tilt of the sensor changes, the pendulum seeks a new null position which represents a true vertical, and motion of the pendulum within the slot of the C-shaped magnet causes the magnet to exert a viscous hysteresis damping force causing the pendulum to come quickly to rest without oscillations about the new null. The hysteresis damping force is proportional to the velocity of the pendulum through the slot, resulting in a high force being exerted when the pendulum is first seeking a new null, with the force lessening as the null is approached. The signals which are developed by the rotor of the resolver are coupled directly to the resolver output terminals by the rotor magnet wire. This arrangement obviates the need for friction causing brushes on the rotor shaft or expensive magnetic coupling arrangements.

It is therefore an object of the invention to provide a cant angle sensor comprising a conductive nonmagnetic pendulum suspended from the shaft of a resolver in the slot of a C-shaped magnet.

It is another object of the invention to provide a cant angle sensor wherein a viscous hysteresis damping force is exerted on a conductive nonmagnetic pendulum by the slot of a C-shaped magnet in which the pendulum is suspended, wherein the pendulum is coupled to the shaft of a resolver which output is connected directly to output terminals without the use of friction producing brushes.

These and other objects of the invention will become apparent from the following specification taken in conjunction with the accompanying drawing figures.

- 4 -

Figure 1 is a perspective view of a cant angle sensor according to the invention.

Figure 2 is a partial sectional view of the resolver in the cant angle sensor of Figure 1.

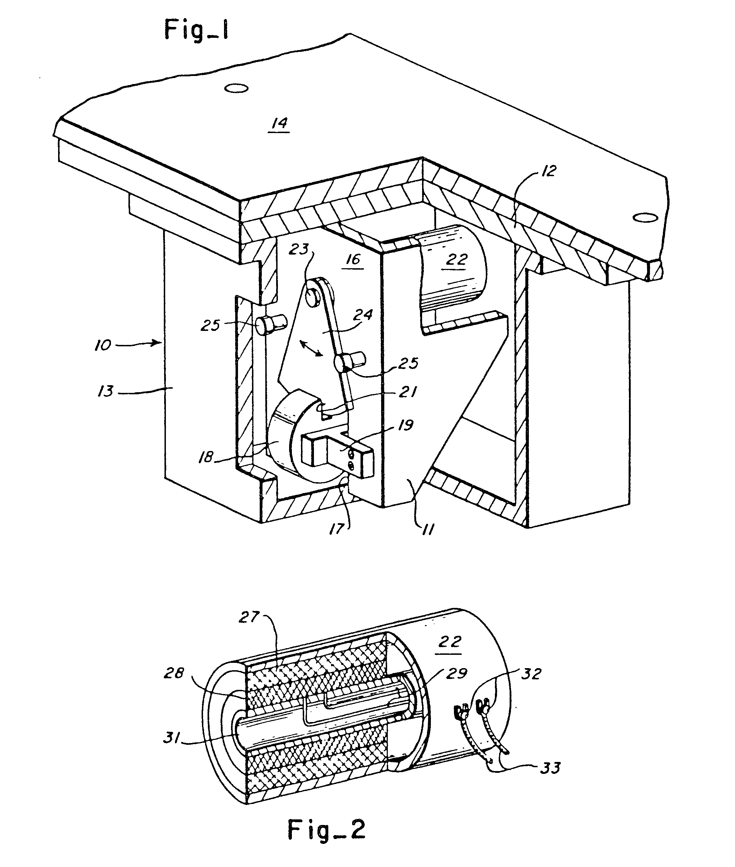

Turning now to the drawings, there is shown in Figure 1 a cant angle sensor generally designated by the reference numeral 10. The sensor comprises a frame 11, a top portion 12, and a housing 13. The top portion 12 may be used in attaching the sensor to a horizontal support surface 14.

The frame 11 includes a front mounting plate 16 having a lower rectangular aperture 17 formed in the bottom portion thereof. A magnet 18 may be positioned in the aperture 17 and the magnet is mounted to the mounting plate 16 by a magnet mount 19. The magnet 18 may be of the Alnico type, is generally C-shaped, and includes a slot 21 which comprises a flux path.

A resolver 22 is located within the frame 11 and may be mounted to the back of the mounting plate 16 in a known way. A resolver shaft 23 may extend through the mounting plate 16 and a pendulum 24 is nonrotatably attached to the resolver shaft 23 with the lower portion of the pendulum 24 disposed within the slot 21. Two stops 25 are positioned on either side of the pendulum 24 and act to limit the arc through which the pendulum may swing. Copper may be preferably employed for the material of the pendulum, but other dense, nonmagnetic and conductive materials such as aluminum, silver, or gold may also be used.

Turning now to Figure 2, it will be seen that within the resolver 22 an array of field coils 27 closely surround an array of rotor coils 28. The rotor coils 28 comprise a high number of turns of magnet wire which is disposed on the rotor form according to known techniques, and the ends 29 of the magnet wire from the rotor coils 28 are led through the rotor shaft 31 to output terminals 32. Lead wires 33 may be connected to the output terminals 32 so that signals developed by the rotor of the resolver may be coupled to a remote indicator (not shown). It will be appreciated that because the stops 25 limit the swing of the pendulum 24 to an arc of 90° or less, the magnet wires 29, although they are attached directly to terminals 32, will not be twisted to the point of fracture by the rotation of the resolver shaft 31.

The operation of the device will be obvious to those skilled in the art. When the support surface 14 to which the sensor 10 is attached is horizontal, gravity will cause the pendulum 24 to be suspended in a vertical null position centered on the mounting plate 16. As the support surface 14 is tipped to the left or right as viewed in Figure 1, the pendulum 24 will rotate relative to the mounting plate 16 to maintain a vertical null position. This will cause the rotor coils 28 of the resolver to rotate relative to the field coils 27 and to develop an electrical signal indicative of the new relative positions of the coils. This signal is coupled to the output terminals of the resolver by the magnet wires 29. As the pendulum which is conducting and nonmagnetic moves across the magnetic flux within the slot 21 of the magnet 18, a viscous hysteresis damping force is developed which is proportional to the speed of motion of the pendulum through the slot. When the velocity of the motion is great, the damping force is high, but as the pendulum approaches a new vertical null position, the decrease in the velocity of motion of the pendulum through the slot 21 causes a decrease in the damping force which is applied to the pendulum. In a steady state condition where the pendulum 24 is at a vertical null position, no force is exerted by the magnet 18. It will be appreciated that the direct connection of the magnet wire 29 to the output terminals 32 avoids the use of brushes which otherwise bear on the rotor shaft 31 and inherently restrict the freedom of motion of the pendulum 24.

A cant angle sensor constructed in accordance with the present invention is able to be much smaller and lighter than heretofore possible because of the combination of the nonmagnetic material of the pendulum which is able to be viscously damped by a small permanent magnet and the frictionless brushless connection, having a substantially zero restoring force, between the rotor shaft and the resolver output terminals.

Having thus described the invention, various modifications and alterations will occur to those skilled in the art, which modifications and alterations are intended to be within the scope of the present invention as defined in the appended claims.

Claims:

1. A cant angle sensor adapted to be attached to a suporting surface (14) for developing a signal which is representative of the tilt of the surface, the sensor including a resolver (22) comprising a rotor (28) and a stator (27), the resolver having a shaft (23) concentric with and rigidly attached to the rotor, a movable pendulum (24) suspended from the resolver shaft (23) and effective to cause relative motion between the rotor and the stator, and stops (25)arranged in the path of the pendulum (24) for limiting the motion of the resolver shaft (23) to less than 90° characterized in that;

resolver rotor magnet wire (29) is connected directly to resolver output terminals (32) to provide a non-rubbing means for coupling a signal generated by the resolver to external leads (33),

the pendulum (24) is composed of conductive, nonmagnetic material, and

a magnet (18) exerts a magnetic field across a flux path (21) in which a portion of the pendulum is suspended for motion, whereby the stops maintain a portion of the pendulum always within the flux path and the magnet exerts a viscous hysteresis damping force on the pendulum as the pendulum moves in the flux path.

2. A cant angle sensor as claimed in claim 1, further characterized in that;

the magnet (18) is a C-shaped magnet and the pendulum (24) is suspended for motion within the gap (21) of the C.

Fig_1

14

12

23

16

22

25

24

10

25

13

21

19

18

17

11

27

22

28

29

32

31

33

Fig_2

0022328

| | DOCUMENTS CONSIDERED TO BE RELEVANT | | CLASSIFICATION OF THE APPLICATION (Int Cl ³) |
|---|---|---|---|
| Category | Citation of document with indication, where appropriate, of relevant passages | Relevant to claim | |
| | US - A - 3 478 569 (H.H. AICHINGER) <br> * Column 3, lines 18-65 * <br> -- | 1 | G 01 C 9/12 |
| | US - A - 3 606 687 (J.N. RICHARD-SON) <br> * Column 2, line 71 - column 3, line 56 * <br> -- | 1 | |
| | US - A - 3 059 343 (D.W. KERMODE) <br> * Figures 2,4; column 2, line 50 - column 3, line 40 * <br> -- | 1 | **TECHNICAL FIELDS SEARCHED (Int. Cl.³)** |
| | US - A - 3 490 153 (J.L. HARRIS) <br> * Column 2, line 44 - column 3, line 35; column 4, lines 52-56 * <br> -- | 1 | G 01 C 9/02 <br> 9/06 <br> 9/12 <br> H 01 F 29/12 <br> H 01 D 35/00 |
| | US - A - 2 803 887 (G.H. FREY) <br> * Column 3, lines 16-54; column 5, lines 45-65 * <br> -- | 1,2 | |
| | US - A - 3 976 965 (C.F. REMUS) <br> * Column 1, line 60 - column 2, line 31 * <br> -- | 1 | **CATEGORY OF CITED DOCUMENTS** <br><br> X: particularly relevant <br> A: technological background <br> O: non-written disclosure <br> P: intermediate document <br> T: theory or principle underlying the invention |
| A | FR - A - 2 343 320 (I.B.M.) <br> * Page 10, lines 1-8 * <br> & GB - A - 1 517 683 <br> -- ./. | 1 | E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 30-09-1980 | DE BUYZER |

EPO Form 1503.1   06.78

**European Patent Office**

**EUROPEAN SEARCH REPORT**

| DOCUMENTS CONSIDERED TO BE RELEVANT | | | CLASSIFICATION OF THE APPLICATION (Int Cl. ³) |
|---|---|---|---|
| Category | Citation of document with indication, where appropriate, of relevant passages | Relevant to claim | |
| A | US - A - 2 933 821 (F.B. D'ENIS) <br> * Column 1, line 67 - column 2, line 38 * <br><br> ---- | 2 | |
| | | | **TECHNICAL FIELDS SEARCHED (Int. Cl. ³)** |